(19) Europäisches Patentamt
European Patent Office
Office européen des brevets

(11)  **EP 2 780 297 B1**

(12)  # EUROPÄISCHE PATENTSCHRIFT

(45) Veröffentlichungstag und Bekanntmachung des Hinweises auf die Patenterteilung:
**15.03.2017   Patentblatt 2017/11**

(51) Int Cl.:
*C04B 24/42* $^{(2006.01)}$         *C08G 77/16* $^{(2006.01)}$
*C08L 83/04* $^{(2006.01)}$         *C09D 183/04* $^{(2006.01)}$

(21) Anmeldenummer: **12780489.6**

(22) Anmeldetag: **30.10.2012**

(86) Internationale Anmeldenummer:
**PCT/EP2012/071483**

(87) Internationale Veröffentlichungsnummer:
**WO 2013/072185 (23.05.2013 Gazette 2013/21)**

(54) **ZUSAMMENSETZUNG UMFASSEND BLOCK-CO-KONDENSATE VON PROPYL-FUNKTIONELLEN ALKALI-SILICONATEN UND SILICATEN SOWIE VERFAHREN ZU DEREN HERSTELLUNG**

COMPOSITION COMPRISING BLOCK COCONDENSATES OF PROPYLFUNCTIONAL ALKALINE SILICONATES AND SILICATES, AND METHOD FOR THE PRODUCTION THEREOF

COMPOSITION CONTENANT DES CO-CONDENSATS EN BLOCS D'ALCALI-SILICONATES ET DE SILICATES À FONCTION PROPYL ET PROCÉDÉ POUR LEUR PRÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2011   DE 102011086362**

(43) Veröffentlichungstag der Anmeldung:
**24.09.2014   Patentblatt 2014/39**

(73) Patentinhaber: **Evonik Degussa GmbH**
**45128 Essen (DE)**

(72) Erfinder:
• **LJESIC, Spomenko**
**79618 Rheinfelden (DE)**
• **STUDTE, Christopher**
**79106 Freiburg (DE)**
• **MACK, Helmut**
**83278 Traunstein (DE)**

(56) Entgegenhaltungen:
**EP-A1- 0 650 968      WO-A1-2012/139803**
**US-A- 3 849 357      US-A1- 2011 207 852**

**Beschreibung**

Die Erfindung betrifft eine Zusammensetzung und ein Verfahren zur Herstellung der Zusammensetzung umfassend Block Co-Kondensate von Propyl-funktionellen AlkaliSiliconaten und Silicaten.

Aufgrund der Wasseraufnahme von porösen mineralischen Baustoffen, wie Beton, Sandsteinen, Kalksandsteinen, Gips, Keramiken oder gebrannten Tonerzeugnissen, beispielsweise Mauerziegel, in Gegenwart von Wasser oder Feuchte, können die Baustoffe geschädigt werden. Eine Instandsetzung von derart geschädigten Baustoffen ist sehr aufwendig und kostenintensiv. Bekannt ist es, hydrophobierende Mittel auf die Oberfläche oder in die Masse bei der Herstellung solcher Baustoffe einzutragen, um die Wasseraufnahme und damit die Schädigung der Baustoffe zu verhindern. Seit einiger Zeit spielen Siliconate als Hydrophobierungsmittel dabei eine wichtige Rolle, insbesondere wenn weniger alkalische Baustoffe, wie Tonerzeugnisse, behandelt werden sollen.

EP 0 650 968 offenbart einen zweistufigen Prozess zur kontinuierlichen Herstellung von Alkalialkylsiliconaten aus Alkyltrichlorsilanen über Alkyltrialkoxysilane. US 4,281,147 beschreibt ein Verfahren zur Herstellung von wässrigen Alkaliorganylsiliconaten durch Reaktion von Organylalkoxypolysiloxanen mit NaOH oder KOH. EP 0 015 366 betrifft ein Verfahren zur Herstellung von Alkalichlorid-freien Alkalimethylsiliconaten durch Umsetzung von Alkalitrichlorsilanen mit einer Base, Fällung der Zwischenstufe durch Ansäuern und abschließendes Auflösen des gewaschenen Filterkuchens in Base.

DE 31 05 407 betrifft Wasser abweisenden Gipsmörtel umfassend ein Fettamin, eine Säure und ein Alkalisiliconat. US 2007/0028809 offenbart eine Gipszusammensetzung umfassend Cellulose und einem Methyl-Siliconat mit Wasser abweisenden Eigenschaften der daraus hergestellten Gipsprodukte.

Die US 3 849 357 A beschreibt eine wasserabweisende Zusammensetzung für Baustoffe, die eine Mischung einer Farbe auf Wasserbasis und ein Silikonharz enthält, das durch Reaktion eines Alkyltrialkoxysilans mit einem Alkylorthosilicat und Wasser oder verdünnter Säurelösung erhältlich ist.

Die US 2011/0207852 A1 beschreibt eine Coating-Zusammensetzung, die ein selbstorganisierendes Silica-Kondensat sowie ein filmbildendes Bindemittel enthält.

Die WO 2012/139803 A1, die als nachveröffentlichter Stand der Technik nur für die Beurteilung der Neuheit relevant ist, beschreibt organofunktionelle Alkalisiliconat-Lösungen mit einem Silicat-Anteil mit einer Eignung zur hydrophobierenden Imprägnierung mineralischer Baustoffe.

Aus dem Stand der Technik ist weder eine Zusammensetzung von Propyl-funktionellen Alkalisiliconaten und Silicaten und deren Co-Kondensate noch ein technisches Verfahren zur industriellen Herstellung einer derartigen Zusammensetzung bekannt.

Aufgabe der vorliegenden Erfindung war die Bereitstellung einer Zusammensetzung, enthaltend wasserlösliche Co-Kondensate von Propyl-funktionellen Alkalisiliconaten und Silicaten, die auch in sehr hoher Verdünnung hydrophobierende Eigenschaften aufweist und deren Kondensationsprodukte auch in hoher Konzentration wasserlöslich bleiben. Zudem sollte ein einfaches und daher wirtschaftliches Verfahren zur Herstellung der Zusammensetzungen umfassend Co-Kondensate von Propyl-funktionellen Alkalisiliconaten mit Silicaten entwickelt werden. Ferner bestand die Aufgabe, Zusammensetzungen der genannten Verbindungen mit einer Eignung zur hydrophobierenden Imprägnierung mineralischer Baustoffe herzustellen, vorzugsweise von Oberflächen mineralischer Baustoffe und/oder zur Hydrophobierung in der Masse bei ihrer Herstellung als auch als Wasser abweisendes Injektionsmittel zur Ausbildung von Sperrschichten gegen Feuchtigkeit. Vorzugsweise werden poröse, mineralische Baustoffe und/oder Untergründe mit der erfindungsgemäßen Zusammensetzung imprägniert. Weiter sollten stabile Zusammensetzungen bereitgestellt werden, die einen hohen Gehalt der Verbindungen aufweisen und vor Ihrer Verwendung leicht mit Wasser verdünnt werden können. Weiter sollten diese Zusammensetzungen nach einer Alternative im Wesentlichen frei von Lösemitteln sein, insbesondere frei von Alkohol sein.

Gelöst wurden die Aufgaben durch die erfindungsgemäße Zusammensetzung nach Anspruch 1 und 17 und das erfindungsgemäße Verfahren entsprechend den Merkmalen des Anspruchs 7 sowie die erfindungsgemäße Verwendung gemäß Anspruch 18. Weitere Merkmale und deren Kombinationen sind in den Unteransprüchen und detailliert in der Beschreibung erläutert.

Überraschend konnte eine Zusammensetzung bereitgestellt werden, die im Wesentlichen wasserlösliche Block-Co-Kondensate von Alkali-Propylsiliconaten mit Alkalisilicaten und Wasser enthält, die erhältlich ist, indem

(i) ein Gemisch umfassend Propylalkoxysilane und Propyl-funktionelle Siloxane abgeleitet aus einem Propylsilan der allgemeinen Formel II,

$$(R^1)_x SiX_{(y-x)} \qquad (II)$$

mit $R^1$ unabhängig ein Propyl-funktioneller Rest und hydrolysierbarem Rest X, der unabhängig Alkoxy oder ein Halogen ist, wobei Alkoxy ausgewählt ist aus Ethoxy, Methoxy, Propoxy und Butoxy und Halogen ausgewählt ist aus Chlor und Brom, mit x gleich 1 oder 2 und y gleich 4, und einem hydrolysierbaren Silan der Formel III

$$SiY_4 \qquad (III)$$

mit hydrolysierbarem Rest Y, der unabhängig Alkoxy oder Halogen ist, wobei Alkoxy ausgewählt ist aus Ethoxy, Methoxy, Propoxy und Halogen ausgewählt ist aus Chlor und Brom, eingesetzt wird, und

(ii) eine Mischung mindestens eines wasserlöslichen Alkalisilicats umfassend ein Natriumwasserglas und/oder ein Kaliumwasserglas und einer wässerigen alkalischen Lösung eines oder mehrerer Alkalihydroxide umgesetzt werden und

(iii) gebildeter Hydrolysealkohol entfernt wird.

Vorzugsweise umfasst (i) das Gemisch Propylalkoxysilane, Tetraalkoxysilane und/oder Kondensate dieser abgeleitet aus Propylhalogensilanen der Formel II mit X gleich Halogen und Tetrahalogensilan der Formel III mit Y gleich Halogen.

Vorzugsweise sind die Alkalihydroxide ausgewählt sind aus Kaliumhydroxid, Natriumhydroxid, Lithiumhydroxid.

Bevorzugte Zusammensetzungen weisen Block-Co-Kondensate von Propyl-Siliconaten mit Silicat auf, die im Alkalischen mit Block-Kondensaten von Silicaten co-kondensiert wurden und als Block-Co-Kondensate von Alkali-Propylsiliconaten mit Alkalisilicaten bezeichnet werden. Der besondere Vorteil der Block-Co-Kondensate besteht darin, dass besonders hochkonzentrierte Zusammensetzungen der darin gelösten Block-Co-Kondensate hergestellt werden können.

Überraschend konnte eine Zusammensetzung bereitgestellt werden, die im Wesentlichen wasserlösliche Block-Co-Kondensate von Alkali-Propylsiliconaten mit Alkalisilicaten und Wasser enthält, wobei insbesondere die Alkali-Propylsiliconate aus Silanen abgeleitete Co-Kondensate sind, und die Block-Co-Kondensate vernetzende Strukturelemente aufweisen, die kettenförmige, cyclische, vernetzte und/oder raumvernetzte Strukturen bilden, und mindestens eine Struktur in idealisierter Form der allgemeinen Formel I entspricht,

$$MO[[Si(R^1)_xY_{((y-2)-x)}O]_a[Si(Y)_2]_b[Si(R^1)_xY_{((y-2)-x)}O]_c]_n\,[[Si(Y)_2]_m]OM \qquad (I)$$

wobei in den aus Alkoxysilanen und Silicaten, wie Alkalisilicat oder synonym Alkaliwasserglas, abgeleiteten Strukturelementen

- R$^1$ einem Propyl-Rest entspricht,
- Y entspricht jeweils unabhängig OM oder OH oder in vernetzten und/oder raumvernetzten Strukturen unabhängig voneinander $O_{1/2}$, d.h. in einer Siloxan-Bindung,
- M entspricht unabhängig voneinander einem Alkaliion, vorzugsweise einem einwertigen Alkaliion, wie Na$^+$ oder K$^+$,
- mit jeweils unabhängig x gleich 1 oder 2, vorzugsweise 1, mit y gleich 3 oder 4, wobei (x + y) = 4 sind, sowie mit jeweils unabhängig $a \geq 1$ und $c \geq 0$, vorzugsweise ist unabhängig jedes $c \geq 1$, $b \geq 0$, insbesondere mit $b \geq 1$, vorzugsweise mit $20 \geq b \geq 2$, besonders bevorzugt mit $15 \geq b \geq 3$, mit $n \geq 1$ Blöcken, ebenfalls bevorzugt mit $n \geq 2$, und mit $m \geq 2$ Silicat-Blöcken, wobei (b + m) = v und $(a + c)/v \leq 1$ ist, ebenso insbesondere mit $v \geq 4$, bevorzugt mit $25 \geq [v = (b + m)] \geq 2$ Silicat-Blöcken, insbesondere mit $25 \geq [v = (b + m)] \geq 4$, vorzugsweise mit $1\,0 \geq [v = (b + m)] \geq 4$, alternativ bevorzugt ist $10 \geq [v = (b + m)] \geq 2$, ebenso bevorzugt mit $10 \geq [v = (b + m)] \geq 5$ in der Kombination mit $(a + c) \geq 2$, insbesondere mit der Maßgabe, dass b kleiner m ist. Ebenso bevorzugte Ausführungsformen sind die Kombinationen mit $n \geq 2$ und $(a + c + b) \geq 4$, wobei jeweils unabhängig $a \geq 1$, $c \geq 1$ und $20 \geq b \geq 1$ und gegebenenfalls mit $m \geq 4$, insbesondere mit $10 \geq v \geq 4$ Silicat-Blöcken, alternativ bevorzugt ist $10 \geq b \geq 1$, insbesondere $4 \geq b \geq 1$, alternativ $4 \geq b \geq 2$ mit $n \geq 1$ und $v \geq 3$. Der Index a liegt vorzugsweise im Bereich von $20 \geq a \geq 1$, bevorzugt ist $10 \geq a \geq 1$, ebenso bevorzugt ist $4 \geq a \geq 1$, wie $4 \geq a \geq 2$. Der Index c liegt vorzugsweise im Bereich von $20 \geq c \geq 0$, bevorzugt ist $10 \geq c \geq 1$, ebenso bevorzugt ist $4 \geq c \geq 1$, wie $4 \geq c \geq 2$. Gemäß einer besonders bevorzugten Alternative liegen in der Formel I Co-Kondensat-Blöcke mit jeweils unabhängig $a \geq 1$, $c \geq 1$, $b \geq 1$ mit $n \geq 1$ vor und zugleich Silicat-Blöcke mit $m \geq 2$, insbesondere mit der Maßgabe, dass m größer b ist.

Dabei sind die Alkali-Propylsiliconate aus di-, oder trifunktionellen hydrolysierbaren Silanen und tetra-funkionellen Silanen abgeleitete Co-Kondensate. Besonders bevorzugt umfasst die Formel I Co-Kondensat-Blöcke mit jeweils unabhängig $a \geq 1$, $c \geq 1$, $b \geq 1$, vorzugsweise mit $b \geq 2$, mit $n \geq 1$ und die Silicat-Blöcken mit $m \geq 2$, wobei b + m = v und $v \geq 4$, insbesondere $v \geq 6$, sind, wobei $(a + c)/v \leq 1$ ist, vorzugsweise ist $a/v \leq 0,5$, bevorzugt ist $0,11 \leq (a + c)/(b + m) \leq 1,0$, ebenso bevorzugt ist $0,11 \leq (a + c)/(b + m) \leq 0,4$, besonders bevorzugt $0,16 \leq (a + c)/(b + m) \leq 0,32$, ebenso besonders bevorzugt ist $(a + c)/(b + m)$ bzw. $(a + c)/v$ um 0,30 mit plus/minus 0,15. Eine besonders bevorzugte Kombination umfasst $a \geq 1$, $c \geq 1$, $b \geq 2$ mit $n \geq 1$ und die Silicat-Blöcken mit $m \geq 2$, wobei (b + m) = v und $v \geq 6$ sind, und wobei $(a+c)/v \leq 1$ ist, insbesondere mit x gleich 1, besonders bevorzugt ist $(a + c)/(b + m)$ bzw. $(a + c)/v$ um 0,30 mit plus/minus 0,15. Gleichfalls bevorzugt ist eine Kombination von n ≥ 2 mit b ≥ 2 und m ≥ 4 mit a und c unabhängig größer gleich 1.

Ebenfalls Gegenstand der Erfindung ist eine Zusammensetzung, die im Wesentlichen wasserlösliche Block-Co-Kondensate von Alkali-Propylsiliconaten mit Alkalisilicaten und Wasser enthält, wobei insbesondere die Alkali-Propylsiliconate aus Silanen abgeleitete Co-Kondensate sind, und die Block-Co-Kondensate vernetzende Strukturelemente aufweisen, die kettenförmige, cyclische, vernetzte und/oder raumvernetzte Strukturen bilden, und mindestens eine Struktur in idealisierter Form der allgemeinen Formel I entspricht, wobei die Block-Co-Kondensate von Alkali-Propylsiliconaten mit Alkalisilicaten im Gemisch mit monomeren Alkali-Propylsilanolaten, insbesondere abgeleitet aus der allgemeinen Formel II, und/oder Alkalisilicaten vorliegt, insbesondere abgeleitet aus der allgemeinen Formel III. Vorzugsweise beträgt das Verhältnis von Propyl-funktionellen Strukturelementen und Propylsilanolaten zu silikatischen Strukturelementen und Silikaten circa 1 : 2 bis 1 : 4, vorzugsweise etwa 1 : 3 mit jeweils plus/minus 0,25, insbesondere mit der Maßgabe, dass in der idealisierten Formel I 10 ≥ [v = (b + m)] ≥ 2 in der Kombination mit n ≥ 1, a ≥ 1, c ≥ 2, d. h. (a + c) ≥ 2, insbesondere mit 10 ≥ [v = (b + m)] ≥ 4, wobei m ≥ 2 ist. Gegebenenfalls sind n und m jeweils unabhängig kleiner gleich 50, ebenso vorzugsweise kleiner gleich 10, besonders vorzugsweise kleiner gleich 5.

Ebenso Gegenstand der Erfindung ist eine Zusammensetzung die im Wesentlichen wasserlösliche Block-Co-Kondensate von Alkali-Propylsiliconaten mit Alkalisilicaten und Wasser enthält, wobei insbesondere die Alkali-Propylsiliconate aus Silanen abgeleitete Co-Kondensate sind, und deren Molekulargewichtsmittel an höhermolekularen Block-Co-Kondensaten, insbesondere der idealisierten Formel I, bei größer gleich 1100 g/mol bis 2000 g/mol liegt und gegebenenfalls liegt ein weiteres Molekulargewichtsmittel an niedermolekularen Kondensaten und/oder Monomeren von Propylsilanolaten und Silikaten bei kleiner gleich 500 g/mol bis 96 g/mol. Vorzugsweise liegen die höhermolekularen Block-Co-Kondensaten im Verhältnis zu den niedermolekularen Kondensaten und Monomeren von 1 : 1,1 bis 1 : 3 vor, vorzugsweise im Verhältnis von 1 : 1,1 bis 1 : 2,0, vorzugsweise bei circa 1 : 1,6 mit plus/minus 0,25.

Im Hinblick auf die Verwendung als Hydrophobierungsmittel im Bautenschutz und aus arbeitschutzrechtlichen Bestimmungen bei der industriellen Herstellung von Bauprodukten, wie Gipskartonplatten oder Ziegelsteinen, ist es bevorzugt, wenn die Zusammensetzungen im Wesentlichen alkoholfrei sind und auch beim Vernetzen im Wesentlichen keinen Alkohol mehr freisetzen. Als alkoholfrei gilt eine Zusammensetzung, wenn sie ≤ 5 Gew.-% Alkohol aufweist oder ≤ 5 Gew.-% Hydrolysealkohol freisetzen kann, vorzugsweise unter 5 Gew.-% bis 0,000001 Gew.-%. Generell werden Zusammensetzungen bereitgestellt, deren Gehalt an Alkohol oder Hydrolysealkohol in der Gesamtzusammensetzung ≤ 3 Gew.-%, bevorzugt ≤ 1 Gew.-% liegt. Bevorzugt gilt eine Zusammensetzung als im Wesentlichen alkoholfrei und/oder frei von Hydrolysealkohol mit einem Gehalt von vorzugsweise ≤ 1 Gew.-ppm bis maximal 2 Gew.-% an Alkohol und/oder Hydrolysealkohol, bevorzugt von 10 Gew.-ppm bis 1 Gew.-%, besonders bevorzugt von 100 Gew.-ppm bis 0,5 Gew.-%, jeweils bezogen auf das Gesamtgewicht der Zusammensetzung. Die im Wesentlichen alkoholfreie Lösung weist einen Flammpunkt von ≥ 100 °C auf.

Der pH-Wert der gebrauchsfertigen Zusammensetzungen, die vor Verwendung einfach in nahezu jedem Verhältnis mit Wasser verdünnbar sind, liegt bei ≥ pH 9, insbesondere ≥ pH 11, vorzugsweise im Bereich von pH 12 bis 14, insbesondere auch pH 13.

Entsprechend einer bevorzugten Ausführungsform liegt die Zusammensetzung als Lösung vor. Unter einer Lösung wird vorzugsweise eine homogene Mischung verstanden, insbesondere umfassend Block-Co-Kondensate (Solute) und mindestens ein Lösemittel, hier Wasser, wobei die Solute vorzugsweise vollständig im Lösemittel, hier Wasser, gelöst sind, d. h. vorzugsweise liegt eine klare Lösung vor. Die Lagerstabiliät der Lösung beträgt mindestens zwölf Monate.

Überraschend wurde ein einfaches und wirtschaftliches Verfahren zur Herstellung von Co-Kondensaten gefunden, dass es erlaubt ohne aufwendige Umsetzung unter Verwendung eines Einleitungsrohrs und Arbeiten unter Inertgas ein Alkali-Co-Kondensat von Propyl-Siliconat und Silicat herzustellen.

Gemäß einer Alternative der Erfindung wurde überraschend gefunden, dass es möglich ist, Zusammensetzungen von wasserlöslichen Block-Co-Kondensaten aus Alkali-Propylsiliconaten mit Silicaten herzustellen, indem in einem ersten Schritt die Herstellung der Propyl-funktionellen Alkoxysilanen und gegebenenfalls Tetraalkoxysilane und/oder Kondensate dieser, wie Homo- und/oder Co-Kondensate, ausgehend von Propylhalogensilan und Tetrahalogensilan in Gegenwart einer stöchiometrischen Menge Alkohol, vorzugsweise eines molaren Überschusses an Alkohol, aus den Halogensilanen gelingt und gegebenenfalls überschüssig zugesetzter Alkohol entfernt werden kann. Das so erhaltene Gemisch der vorgenannten Alkoxysilane und ggf. deren Kondensate wird anschließend in einem zweiten Schritt mit einer Mischung eines wasserlöslichen Silicats, insbesondere Alkalisilicats, gelöst in einer wässrigen alkalischen Lösung umgesetzt, vorzugsweise einer wässerigen Alkalihydroxid-Lösung. Diese Umsetzung des Gemisches mit dem wasserlöslichen Silicat und dem Alkalihydroxid führt zur Bildung von Block-Co-Kondensaten von Alkali-Propylsiliconaten mit Alkalisilicaten. Der bei der Hydrolyse und Kondensation gebildete Hydrolysealkohol wird nahezu vollständig entfernt. Besonders überraschend war, dass durch die erfindungsgemässe Verfahrensführung im zweiten Reaktionsschritt auf einfache und wirtschaftliche Weise die Umsetzung des Reaktionsprodukts aus dem ersten Schrittes durch den Zusatz eines Alkalisilicats zu der wässrigen alkalischen Lösung ohne besondere Maßnahmen und ohne wesentliche Bildung von Niederschlägen gelingt. Auch der freigesetzte Hydrolysealkohol im zweiten Schritt kann nahezu vollständig entfernt werden, ohne dass es zu Ausfällungen des Silicats und/oder Siliconats kommt.

Gegenstand der Erfindung ist somit ein Verfahren zur Herstellung einer Zusammensetzung enthaltend mindestens ein im Wesentlichen wasserlösliches Block-Co-Kondensat von Alkali-Propylsiliconaten mit Alkalisilicaten und Wasser, sowie eine Zusammensetzung erhältlich nach diesem Verfahren, indem

(i) (1) ein Gemisch umfassend Propylalkoxysilan und -siloxan hergestellt wird indem ein Propylsilan der allgemeinen Formel II mit X gleich Halogen mit einem Alkohol gegebenenfalls in Gegenwart von Wasser umgesetzt wird, und Entfernen des Alkohols und/oder Hydrolysealkohols oder

(2) ein Gemisch umfassend Propylalkoxysilan und Tetraalkoxysilan und/oder Kondensate oder Co-Kondensate dieser hergestellt wird
indem mindestens ein Propylsilan der allgemeinen Formel II mit X gleich Halogen und mindestens ein hydrolysierbares Silan der Formel III mit Y gleich Halogen mit einem Alkohol gegebenenfalls in Gegenwart von Wasser umgesetzt werden, und Entfernen des Alkohols und/oder Hydrolysealkohols, und wobei

(ii) das Gemisch umfassend Propylalkoxysilane und gegebenenfalls Propyl-funktionelle Siloxane abgeleitet aus einem Propylsilan der allgemeinen Formel II,

$$(R^1)_x SiX_{(y-x)} \qquad (II)$$

mit $R^1$ unabhängig ein Propyl-funktioneller Rest und hydrolysierbarem Rest X, der unabhängig Alkoxy oder ein Halogen ist, insbesondere im Wesentlichen ausgewählt aus Ethoxy, Methoxy, Propoxy und Butoxy oder im Wesentlichen ausgewählt aus Chlor und Brom ist, mit x gleich 1 oder 2 und y gleich 4, und gegebenenfalls einem hydrolysierbaren Silan der Formel III

$$SiY_4 \qquad (III)$$

mit hydrolysierbarem Rest Y, der unabhängig Alkoxy oder ein Halogen ist, insbesondere im Wesentlichen ausgewählt aus Ethoxy, Methoxy, Propoxy und Butoxy oder im Wesentlichen ausgewählt aus Chlor oder Brom ist, eingesetzt wird, und eine Mischung mindestens eines wasserlöslichen Alkalisilicats und einer wässerigen alkalischen Lösung einer anorganische Base ausgewählt aus Kaliumhydroxid, Natriumhydroxid, Lithiumhydroxid umgesetzt werden, und (iii) gebildeter Hydrolysealkohol entfernt wird.

Insbesondere ein Gemisch umfassend Propylalkoxysilane, Tetraalkoxysilane und/oder Kondensate dieser, wie Co- und/oder Homo-Kondensate, abgeleitet aus Propylhalogensilanen der Formel II mit X gleich Halogen und Tetrahalogensilan der Formel III mit Y gleich Halogen.

Dabei ist es besonders bevorzugt, wenn als Alkalisilicat ein Natriumwasserglas und/oder ein Kaliumwasserglas eingesetzt wird. Generell können alle wasserlöslichen Silicate verwendet werden.

Weiter ist es bevorzugt, wenn in dem Verfahren das Gemisch umfassend Propylalkoxysilan, insbesondere der Formel II mit X gleich Alkoxy, bevorzugt Ethoxy, und ggf. Kondensate dieser hergestellt wird indem ein Propylsilan der allgemeinen Formel II mit X gleich Halogen, insbesondere Chlor oder Brom, bevorzugt ist Chlor, mit einem Alkohol, insbesondere Methanol, Ethanol, Propanol, Butanol, bevorzugt ist Ethanol, gegebenenfalls in Gegenwart von Wasser umgesetzt wird, und der Alkohol und/oder Hydrolysealkohol entfernt wird. Generell wird in dem erfindungsgemäßen Verfahren der Alkohol und/oder Hydrolysealkohol destillativ, bevorzugt unter vermindertem Druck und erhöhter Temperatur entfernt.

Gemäß einer besonders bevorzugten Alternative wird in dem erfindungsgemäßen Verfahren das Gemisch umfassend Propylalkoxysilan; insbesondere der Formel II mit X gleich Alkoxy, bevorzugt Ethoxy, Tetraalkoxysilan, insbesondere der Formel III mit Y gleich Alkoxy, bevorzugt Ethoxy, und/oder Kondensate dieser, wie Co-Kondensate, hergestellt, indem mindestens ein Propylsilan der allgemeinen Formel II mit X gleich Halogen, insbesondere Chlor oder Brom, bevorzugt ist Chlor, und mindestens ein hydrolysierbares Silan der Formel III mit Y gleich Halogen, insbesondere Chlor oder Brom, bevorzugt ist Chlor, mit einem Alkohol, insbesondere Methanol, Ethanol, Propanol, Butanol, bevorzugt ist Ethanol, gegebenenfalls in Gegenwart von Wasser umgesetzt werden, besonders bevorzugt wird mit einem molaren Überschuss Alkohol in Bezug auf die hydrolysierbaren Gruppen umgesetzt, und der Alkohol und/oder Hydrolysealkohol entfernt wird.

Erfindungsgemäß umfasst die Mischung in (ii) das wasserlösliche Alkali-Silicat, wie Natriumwasserglas oder Kaliumwasserglas, und eine wässrige Lösung eines oder mehrerer Alkalihydroxide, wie Kaliumhydroxid, Natriumhydroxid, bevorzugt ist eine wässrige Lösung von Kaliumhydroxid. Besonders bevorzugte wässerige alkalische Lösungen enthalten von 5 bis 60 Gew.-% der anorganischen Base, bevorzugt sind Lösungen mit einem Basengehalt von 10 bis 40 Gew.-%, besonders bevorzugt von 20 bis 40 Gew.-% einschließlich aller Zwischenwerte, beispielsweise 7, 12, 15, 17, 22, 27, 28, 30, 32, 35, 37, 42, 45, 47, 50, 52, 55, 57 Gew.-%, - um nur einige der Zahlenwerte zu nennen. Üblicherweise werden wässrige alkalische Lösungen mit einem Gehalt an Alkalihydroxid zwischen 20 bis 40 Gew.-% eingesetzt, wie vorzugsweise wässrige Kaliumhydroxidlösungen mit einem Gehalt von etwa 33 Gew.-%.

Das Stoffmengenverhältnis an hydrolysierbaren Resten, insbesondere X und/oder Y, des Gemisches aus Schritt (i), vorzugsweise sind X und Y Alkoxy, zum eingesetzten Alkalihydroxid und/oder AlkaliO-Gruppen im Alkaliwasserglas, vorzugsweise von Hydroxid-Ionen und O⁻-Ionen aus Alkalihydroxid und Alkaliwasserglas, liegt in der Regel bei 1 : 15 bis 15 : 1, vorzugsweise liegt es bei bzw. zwischen 1 : 12 bis 12 : 1 einschließlich jeweils der Grenzwerte, besonders bevorzugt um etwa 1 : 10 bis 10 : 1, besonders vorzugsweise ist das Verhältnis 1 : 8 bis 8 : 1, ebenfalls bevorzugt sind 1 : 10 bis 1 : 1, besonders bevorzugt bei etwa 1 : 5 bis 5 : 1 mit einer Schwankung von plus/minus 0,5. Ebenso besonders bevorzugt ist das Verhältnis 1 : 1,5 bis 1 : 2,0. Bevorzugt ist auch ein Verhältnis von etwa 1 : 10 mit einer Schwankung von plus/minus 0,5. So können auf etwa 1 mol hydrolysierbare Reste bis zu etwa 10 mol, vorzugsweise bis zu 8 mol Hydroxid eingesetzt werden oder nach einer alternativen Verfahrensführung auch auf etwa 1 mol hydrolysierbare Gruppen etwa 1 bis 5 mol Hydroxid und O⁻-Ionen, bevorzugt 1 bis 2 mol. Bei der Zugabe zur Alkalihydroxid-Lösung umfassen die hydrolysierbaren Reste die Hal-Reste und/oder die durch Veresterung mit dem Alkohol gebildeten Alkoxygruppen, insbesondere an den Silanen der allgemeinen Formeln II und/oder III als auch gegebenenfalls an den gebildeten Propyl-funktionellen Alkalisiliconaten, Silicaten und gegebenenfalls gebildeten Co-Kondensationsprodukten dieser.

Somit ist der hydrolysierbare Rest X der Formel II je nach Verfahrensschritt unabhängig ein Methoxy, Ethoxy, Propoxy, Butoxy, Chlor und/oder Brom, insbesondere Ethoxy oder Chlor, und der hydrolysierbare Rest Y der Formel III ist unabhängig ein Methoxy, Ethoxy, Propoxy, Butoxy, Chlor und/oder Brom, insbesondere unabhängig gleich Ethoxy oder Chlor.

Im erfindungsgemäßen Verfahren wird vorzugsweise ein im Wesentlichen wasserlösliches Block-Co-Kondensat von Alkali-Propylsiliconaten mit Alkalisilicaten hergestellt, indem

(i) ein Gemisch umfassend Propylethoxysilan und gegebenenfalls Propyl-funktionelle Siloxane abgeleitet aus einem Propylchlorsilan der allgemeinen Formel II

$$(R^1)_x SiX_{(y-x)} \qquad (II)$$

mit $R^1$ unabhängig ein Propyl-funktioneller Rest, insbesondere n-Propyl und/oder iso-Propyl-, bevorzugt n-Propyl, mit X gleich Chlor und gegebenenfalls einem Tetrachlorsilan der Formel III

$$SiY_4 \qquad (III)$$

mit Y gleich Chlor mit (ii) einer Mischung mindestens eines wasserlöslichen AlkaliSilicats, insbesondere Natriumwasserglas oder Kaliumwasserglas und einer wässerigen Alkalihydroxid Lösung, vorzugsweise einer wässrigen Kaliumhydroxid oder Natriumhydroxid Lösung, umgesetzt wird, wobei das Gemisch hergestellt wird indem Propylchlorsilan der allgemeinen Formel II mit Ethanol, insbesondere im Überschuss in Bezug auf die hydrolysierbaren Gruppen, gegebenenfalls in Gegenwart von Wasser umgesetzt wird, und das überschüssige Ethanol und/oder Hydrolysealkohols entfernt wird, oder in einer Alternative das Gemisch umfassend Propylalkoxysilan, Tetraethoxysilan und/oder Kondensate oder Co-Kondensate dieser hergestellt wird, indem mindestens ein Propylchlorsilan, insbesondere ein Propyltrichlorsilan, bevorzugt ein n-Propyltrichlorsilan, und mindestens ein Tetrachlorsilan der Formel III mit Ethanol, insbesondere im Überschuss in Bezug auf die hydrolysierbaren Gruppen, gegebenenfalls in Gegenwart von Wasser umgesetzt werden, und der überschüssige Alkohol und/oder Hydrolysealkohol entfernt wird.

Dabei wird das Gemisch aus Schritt (i), vorzugsweise unmittelbar nach seiner Herstellung, im Schritt (ii) einer Mischung eines wasserlöslichen Silicats in wässriger alkalischer Lösung zugesetzt, und eine Zusammenfassung enthaltend Block-Co-Kondensate von Alkali-Propylsiliconaten mit Alkalisilicaten erhalten durch eine Umsetzung und Co-Kondensation von Hydrolysaten von Propylalkoxysilanen und Tetraalkoxysilanen mit Block-Kondensaten eines Silicats. Ebenso bevorzugt kann das Gemisch aus Schritt (i) abgetrennt werden und ggf. gelagert werden und anschließend im Schritt (ii) einer Mischung eines wasserlöslichen Silicats in wässriger alkalischer Lösung zugesetzt werden.

Dabei ist es im erfindungsgemäßen Verfahren weiter bevorzugt, wenn alternativ oder zusätzlich zu den vorgenannten Merkmalen das Gemisch umfassend Propylalkoxysilan und/oder -siloxane abgeleitet aus einem Propylhalogensilan der allgemeinen Formel II und gegebenenfalls einem Tetrahalogensilan der Formel III der Mischung eines wasserlöslichen Silicats in wässeriger alkalischer Lösung zugesetzt wird, wobei insbesondere intensive durchmischt wird, vorzugsweise wird intensiv gerührt. Besonders bevorzugt wird das Gemisch tropfenweise und/oder unter starker Durchmischung der wässrigen alkalischen Lösung zugesetzt.

Bevorzugte Propyl-funktionelle Silane der allgemeinen Formel II sind Propylhalogensilane, wie ein n-Propyltrihalogensilan, iso-Propyltrihalogensilan, Di-n-propyldihalogensilan, Di-iso-propyldihalogensilan, wie vorzugsweise n-Propyltrichlorsilan, iso-Propyl-trichlorsilan, Di-n-Propyldichlorsilan, iso-Propyl-, n-Propyldichlorsilan oder Di-isopropyldichlorsilan, wobei der Fachmann auch die entsprechenden bromierten oder gemischt halogenierten Propylhalogensilane, insbesondere umfassend Chlor und Brom, kennt und einsetzen kann.

Generell können das Propylsilan der Formel II und das Silan der Formel III in jedem Verhältnis eingesetzt werden, insbesondere im Verhältnis von 1 : 0 bis 0,01 : 1, insbesondere von 1 : 0 bis 0,5 bis 1. Die hervorragende hydrophobierende Wirkung in Kombination mit der guten Wasserlöslichkeit wird erzielt, wenn das Propylsilan der allgemeinen Formel II und das Silan der Formel III in einem molaren Verhältnis von 1 : 0: bis 3 : 1 eingesetzt werden. Bevorzugt wird das Propylsilan der Formel II im Verhältnis zum Silan der Formel III im Verhältnis von 1 : 1, insbesondere mit plus/minus 0,5 eingesetzt.

Gemäß einer besonders bevorzugten Verfahrensvariante wird im Schritt (i) eine Veresterung von Halogensilanen durchgeführt, indem Propylchlorsilan (PCTS) und Silantetrachlorid (STC) mit Ethanol (EtOH) umgesetzt werden:

1 mol (PTCS + STC) + 3,85 mol EtOH → Vollverestertes Zwischenprodukt + 3,5 mol HCl

Bevorzugt 0,5 mol PTCS + 0,5 mol STC + 3,85 mol EtOH → Vollverestertes Zwischenprodukt + 3,5 mol HCl

Vorzugsweise Entfernung des überschüssigen Alkohols.

Schritt (ii): Umsetzung des Zwischenproduktes aus Schritt (i) mit 33,3 Gew.-% KOH-Lösung und 35 Gew.-% Natronwasserglas:

Vollverestertes Zwischenprodukt + 33,3 Gew.-% wässerige Lösung KOH + 35 Gew.-% Natronwasserglas → Block-Co-Kondensate von K-Propylsiliconat/Silicat mit Silikat (Wasserglas) + 3,5 EtOH

und Entfernung des Alkohols. Es wird eine Zusammensetzung mit sehr hoher Wirkstoffkonzentration als unmittelbares Verfahrensprodukt erhalten.

Entsprechend einer erfindungsgemäß bevorzugten Verfahrensvariante wird im Schritt (i) ein Propyltrichlorsilan, der Formel II, und ein Tetrachlorsilan, der Formel III, vorgelegt und Ethanol mit 10 %igem molaren Überschuss in Bezug auf die hydrolysierbaren Halogenreste unter Rühren zugetropft. Nach Beendigung der Reaktion wurde überschüssiges Ethanol abdestilliert. Im Schritt (ii) wurde das so erhaltene Gemisch mittels einer Dosiervorrichtung (ohne Inertgas und Einleitungsrohr) in eine wässrige Mischung einer wässrigen 33,3 Gew.-%igen KOH-Lösung und 35 Gew.-%igem Natronwasserglas (wässriges Natronwasserglas unter Berücksichtigung von $Na_2O$) tropfenweise unter Rühren eingebracht. Gebildetes Ethanol wurde im Schritt (iii) abdestilliert. Die erhaltene Zusammensetzung hat einen erhöhten $SiO_2$-Gehalt und damit eine bessere Performance auch bei sehr hohen Verdünnungen. So konnten die Abperleigenschaften der behandelten Substraten (Ziegel, Gips, Beton, Kalkstein, Sand, Wandputz stark verbessert werden. Besonders gute Resultate wurden mit Propylsilanen der Formel II und Silanen der Formel III im molaren Verhältnis von 1 : 0 bis 3 : 1 bei der Ausprüfung erhalten.

Der im ersten Verfahrensschritt eingesetzte Alkohol kann technischer Qualität mit einem gewissen Wassergehalt, insbesondere mit 4 bis 10 Gew.-% Wasser, oder ein wasserfreier Alkohol sein. Bei Verwendung von wasserhaltigen Alkoholen können im ersten Verfahrensschritt vermehrt Alkoxysiloxane gebildet werden, die im zweiten Verfahrensschritt zumindest teilweise wieder abgebaut werden können, während bei Verwendung von wasserfreien Alkoholen im Wesentlichen Gemische umfassend Propylalkoxysilane und gegebenenfalls Tetraalkoxsilane erhalten werden. Die Umsetzung im ersten Verfahrensschritt wird vorzugsweise mit einem Überschuss an Alkohol durchgeführt, so dass zumindest ein Teil der bei der Umsetzung gebildeten Halogenwasserstoffsäure mit dem Alkohol abdestilliert werden kann.

Daher ist es bevorzugt, wenn der Alkohol im molaren Verhältnis von 0,001 : 1 bis 100 : 1 in Bezug auf die hydrolysierbaren Reste in Mol zugesetzt wird. Vorzugsweise wird der Alkohol im molaren Verhältnis von 1 : 1 bis 10:1, besonders bevorzugt im Verhältnis von 1 : 1 bis 1:2 eingesetzt. Weiter bevorzugt werden je hydrolysierbare Gruppe etwa 1,1 mol Alkohol zugesetzt. Bevorzugt wird im Schritt (i) Alkohol zu 1 bis 200 mol-%, insbesondere 100 bis 150 mol-% in Bezug auf die hydrolysierbaren Reste Si-Hal der Verbindungen II und III eingesetzt, insbesondere wird als Alkohol Ethanol eingesetzt. Generell ist es bevorzugt, mehr als die stöchiometrische Menge Alkohol, wie EtOH, einzusetzen, insbesondere 100 bis 110 mol-%, bevorzugt 105 bis 115 mol-%, besonders bevorzugt um 110 mol-%, jeweils bezogen auf die molare Menge der hydrolysierbaren Si-Hal Bindungen bzw. hydrolysierbaren Hai-Resten an Silizium-Atomen, vorzugsweise der allgemeinen Formeln II und III.

Überraschenderweise wurde gefunden, dass die Umsetzung zuverlässig gelingt, wenn das Gemisch aus dem Schritt (i), das Reaktionsprodukt, mit einer, ein wasserlösliches Silicat enthaltenden, stark alkalisch eingestellten, wässrigen Lösung gemischt wird, insbesondere sollte die Lösung mindestens eine äquimolare Menge an Alkali, vorzugsweise Hydroxid-Ionen und/oder -O⁻, in Bezug auf die hydrolysierbaren Reste Si-Alkoxy und/oder Si-Hal der Silane der Formeln II und III enthalten, bevorzugt sind 1 bis 2 mol Hydroxid-Ionen je mol hydrolysierbarem Rest. Die Bildung von festen silicatischen Partikeln oder Ablagerungen kann besonders dann gut vermieden werden. Ein besonderes Merkmal des Verfahren ist es dabei, dass das Gemisch aus Schritt (i) unmittelbar in Schritt (ii) zu einer Mischung eines Alkalisilicats in wässriger, alkalischer Lösung zugetropft werden kann, insbesondere wird die Mischung aus Schritt (i) portionsweise, vorzugsweise tropfenweise unter Durchmischung, wie Rühren, in die Lösung eingetropft. Besondere Maßnahmen, die die Bildung von Niederschlägen verhindern sind anders als bei einem Verfahren, in dem direkt in die Lösung eingedüst werden muss, nicht notwendig, da die vorgelegten Alkalisilicate zur Lösungsvermittlung des zugetropften Gemisches beitragen. Der besondere Vorteil der Erfindung zeigt sich in der verfahrensgemäßen direkten Bildung klarer wässriger Lösungen ohne Niederschläge oder Ausfällungen.

Erfindungsgemäß wird in Schritt (iii) die erhaltene Zusammensetzung vom Hydrolysealkohol und ggf. zugesetztem Alkohol befreit und kann bei Bedarf mit Wasser weiter verdünnt werden. Der Alkohol und/oder Hydrolysealkohol wird vorzugsweise destillativ entfernt. Gleichfalls kann die Wirkstoffkonzentration durch Zugabe von Wasser und Entfernung von Hydrolysealkohol auf eine gewünschte Konzentration eingestellt werden. Es besteht die Möglichkeit in dem Maße Wasser zugegeben, wie Alkohol und/oder Hydrolysealkohol entfernt wird. Ebenso kann die gewünschte Wirkstoffkonzentration durch Zugabe von Wasser beliebig verringert werden. Generell ist aber auch schon die erhaltene alkoholhaltige Zusammensetzung oder die Zusammensetzung nach Entfernen des Alkohols ohne Zugabe von Wasser gebrauchsfertig und für eine Anwendung geeignet. Ein Vorteil der rein wässrigen alkoholfreien Zusammensetzung ist ihr reduzierter VOC Gehalt in der späteren Anwendung. Erfindungsgemäß wird der Alkohol destillativ aus der Lösung entfernt, um eine VOC verminderte Lösung zu erhalten, die unmittelbar gebrauchsfertig ist und bei Bedarf einfach mit Wasser weiter verdünnt werden kann.

Gemäß einer besonders bevorzugten Verfahrensvariante wird im erfindungsgemäßen Verfahren vorzugsweise ein im Wesentlichen wasserlösliches Block-Co-Kondensat von Alkali-Propylsiliconaten mit Alkalisilicaten hergestellt, indem im Schritt (i) ein Gemisch umfassend Propylethoxysilan, Tetraethoxysilan und gegebenenfalls Propyl-funktionelle Siloxane hergestellt wird indem ein Propyltrihalogensilan der allgemeinen Formel II, vorzugsweise Propyltrichlorsilan, und ein Tetrahalogensilan der Formel III, vorzugsweise Tetrachlorsilan, die insbesondere im molaren Verhältnis von 1 : 0,5 bis 3 : 1, vorzugsweise etwa im molaren Verhältnis von 1 : 1 eingesetzt werden, mit einem Alkohol, vorzugsweise Ethanol, umgesetzt werden, wobei der Alkohol, vorzugsweise Ethanol, in Bezug auf die hydrolysierbaren Halogenreste der Formeln II und III im molaren Überschuss eingesetzt wird, vorzugsweise in etwa 20 %igem, vorzugsweise in 10 %igem molaren Überschuss, und anschließend nicht umgesetzter Alkohol destillativ entfernt wird; und im Schritt (ii) wird das in (i) hergestellte Gemisch mit einer Mischung mindestens eines wasserlöslichen Alkali-Silicats; insbesondere Natriumwasserglas oder Kaliumwasserglas; und einer wässerigen Alkalihydroxid Lösung, vorzugsweise einer wässerigen Kaliumhydroxid oder Natriumhydroxid Lösung, umgesetzt, wobei die Mischung vorzugsweise 1 bis 5 mol, besonders vorzugsweise 1 bis 2 mol AlkaliO/Hydroxid-Gruppen je hydrolysierbarer Alkoxygruppe aufweist, und in Schritt (iii) wird der gebildete Hydrolysealkohol destillativ entfernt. Als AlkaliO gelten die AlkaliO-Gruppen im Alkaliwasserglas.

Generell kann die Zusammensetzung, insbesondere die alkoholfreie Zusammensetzung, direkt bei der Herstellung auf einen Gehalt an Block-Co-Kondensaten von Alkali-Propylsiliconaten mit Alkalisilikaten von 1 bis 80 Gew.-% und auf alle dazwischen liegenden Werte bezogen auf das Gesamtgewicht der Zusammensetzung eingestellt werden - sie ist unmittelbar gebrauchsfertig - vorzugsweise kann sie auf einen Gehalt von 1 bis 60 Gew.-% in Bezug auf die Gesamtzusammensetzung eingestellt werden, alternativ auf 30 bis 60 Gew.-%, besonders bevorzugt auf 40 bis 60 Gew.-% oder auch auf 45 bis 55 Gew.-%. Als Wirkstoffgehalt oder Gehalt gilt der Gehalt von Block-Co-Kondensaten unter Berücksichtigung der Alkaliionen, bzw. Alkalioxide und ladungsneutraler Verbindungen, d. h. der Gehalt der Alkali-Siliconat und Alkali-Silikat Block-Co-Kondensate und der Alkalisilanolate und Alkalisilikate.

Nach dem erfindungsgemäßen Verfahren ist es folglich möglich, sehr hochkonzentrierte Zusammensetzungen herzustellen. Diese hochkonzentrierten Zusammensetzungen sind lagerstabil, bevorzugt über 6 Monate, vorzugsweise um 12 Monate. Bei Bedarf kann die Zusammensetzung vor einer Verwendung, d. h. eine rein wässrige im Wesentlichen alkoholfreie Zusammensetzung, mit Wasser und/oder mit einem organischen Lösemittel auf einen Gehalt an Block-Co-Kondensaten von Alkali-Propylsiliconaten mit Alkalisilicaten von 1 bis 60 Gew.-% in Bezug auf die Gesamtzusammensetzung und auf alle dazwischen liegenden Werte verdünnt werden, vorzugsweise auf 1 bis 30 Gew.-%, oder vorzugsweise auf 1 bis 20 Gew.-%, besonders bevorzugt auf 1 bis 10 Gew.-%, sowie auf 1 bis 5 Gew.-%.

Der Gehalt hängt auch direkt mit dem eingesetzten mineralischen Baustoff und/oder der Art der Anwendung zusammen. So können für die Anwendung auf Oberflächen Lösungen mit einem geringen Gehalt geeignet sein und beispielsweise bei der Hydrophobierung in der Masse Lösungen mit einem hohen Gehalt, insbesondere bei der Hydrophobierung von Gips enthaltenden mineralischen Baustoffen. Ebenfalls können hoch konzentrierte Zusammensetzungen bevorzugt sein, wenn bereits Wasser als Anmachwasser bei der Hydrophobierung in der Masse zugesetzt wird. Generell kann der Wirkstoffgehalt (Block-Co-Kondensate unter Berücksichtigung von Alkali, Alkalisilanolaten und Alkalisilikaten) auch von bzw. zwischen 1 bis 10 Gew.-% in der Zusammensetzung betragen, oder je nach Anwendung 1 bis 5 Gew.-%, 5 bis 10 Gew.-%, 10 bis 15 Gew.-%, 15 bis 20 Gew.-% oder 20 bis 30 Gew.-% oder auch 30 bis 40 Gew.-% oder von bzw. zwischen 40 bis 60 Gew.-%. Der $SiO_2$-Gehalt der Gesamtzusammensetzung liegt in der hergestellten oder gebrauchsfertigen Zusammensetzung vorzugsweise bei 5 bis 30 Gew.-%, insbesondere bei 8 bis 20 Gew.-%, bevorzugt bei 10 bis 15 Gew.-%, besonders bevorzugt bei 12 bis 14 Gew.-%. Die Bestimmung des $SiO_2$-Gehaltes kann nach dem Fachmann bekannten Methoden erfolgen.

Während der Herstellung des Gemisches aus Propylsilan der Formel II, dem Silan der Formel III und Alkohol oder Alkohol/Wasser-Mischung steigt die Temperatur reaktionsbedingt im Schritt (i) an. Verfahrensgemäß sollte die Temperatur im Schritt (i) 80 °C nicht übersteigen, besonders bevorzugt soll die Temperatur 60 °C nicht übersteigen, gegebenenfalls wird gekühlt. Auch im Schritt (ii) steigt die Temperatur reaktionsbedingt etwas an, sie soll jedoch 60 °C, vorzugsweise 50 °C nicht übersteigen, d. h. gegebenenfalls wird im Schritt (ii) gekühlt oder das Gemisch aus Schritt (i) wird langsamer, portionsweise in die Mischung des Schritts (ii) eingeleitet. In Schritt (iii) wird vorzugsweise der Alkohol und/oder Hydrolysealkohol, insbesondere so unter Vakuum entfernt, dass die Temperatur nicht über 80 °C, vorzugsweise nicht über 60 °C ansteigt.

In dem erfindungsgemäßen Verfahren wird in Schritt (i) der Alkohol und/oder in Schritt (iii) der Alkohol/Hydrolysealkohol entfernt, insbesondere wird der Alkohol/ Hydrolysealkohol destillativ, bevorzugt unter vermindertem Druck und erhöhter Temperatur entfernt. Bevorzugt wird bei unter 300 mbar, besonders bevorzugt unter 180 mbar, vorzugsweise jeweils kleiner gleich 10 mbar und insbesondere bei etwa 50 °C destilliert.

Bei der Einleitung des Gemischs aus Schritt (i) in die Mischung im Schritt (ii) umfassend Alkalisilicate und Alkalihydroxid-Ionen; als Strukturelemente, d.h. als Block-Kondensate $MO[Si(Y)_2]_mOM$ auch als Block-Kondensate B bezeichnet; in einer wässerigen Lösung können sich Propyl-funktionelle Alkalisiliconate, wie $MO[Si(R^1)_xY_{((y-2)-x)}O]_aM$ der idealisierten Formel IV oder $MO[Si(R^1)_xO^-_{((y-2)-x)}O]_aM + M_a$ der idealisierten Formel IVa, und $MO[Si(R^1)_xY_{((y-2)-x)}O]_cM$ der idealisierten Formel IVb oder $MO[Si(R^1)_xO^-_{((y-2)-x)}O]_cM + M_c$ der idealisierten Formel IVc, Alkalisilicate, wie $MO[Si(Y)_2]_bOM$ der idealisierten Formel V, und deren Co-Kondensationsprodukte bilden. Diese idealisiert dargestellten Propyl-funktionellen Alkalisiliconate der Formel IV, IVa, IVb, IVc und Alkalisilicate der Formel V können Homo- und/oder Co-Kondensate bilden, wie sie idealisiert in der allgemeinen Formel I als $MO[[Si(R^1)_xY_{((y-2)-x)}O]_a[Si(Y)_2]_b[Si(R^1)_xY_{((y-2)-x)}O]_c]_nM$ (I) dargestellt sind, wobei in der Zusammensetzung M in einer Anzahl vorhanden ist, dass das Block-Co-Kondensat ladungsneutral ist. Bei Ausbildung von Homo-Kondensaten ist a größer gleich 1, c größer gleich 0 und b gleich 0 oder a gleich 0, c gleich 0 und b größer gleich 1. Bei Ausbildung von Co-Kondensaten sind a und b größer 1 und c ist größer gleich 0, vorzugsweise größer gleich 1. Diese Homo- und/oder Co-Kondensate werden als Block-Kondensate A bezeichnet und die Silikatblöcke als Blockkondensate B, so dass die allgemeine Formel I auch dargestellt werden kann als $MO[A]_n[B_m]OM$ (I), oder als

$$MO[[Si(R^1)_xY_{(y-2)-x}O]_a[Si(Y)_2]_b[Si(R^1)_xY_{(y-2)-x}O]_c]_n[[Si(Y)_2]_m]OM \qquad (I)$$

Nach dem erfindungsgemäßen Verfahren bilden sich vorzugsweise bei der Umsetzung bei erhöhten Temperaturen Block-Co-Kondensate, die Blöcke von Co-Kondensaten abgeleitet aus Propylalkoxysilanen und Tetraalkoxysilanen aufweisen, die mit in der Mischung vorliegenden Blöcken der Alkalisilicate kondensieren. Aufgrund des erfindungsgemäß eingestellten pH-Wertes im Schritt ii bildet sich unter den Verfahrensbedingungen gleichzeitig ein definiertes Molekulargewicht der Alkalisilikate (Alkaliwasserglas) aus, die dann mit den Co-Kondensaten reagieren können. Daher wird angenommen, dass sich aufgrund der speziellen Verfahrensführung in Schritt (ii) Block-Co-Kondensate entsprechend der idealisiert dargestellten Formel I bilden, mit $R^1$ gleich n-Propyl oder iso-Propyl und Y jeweils unabhängig $Y = O_{1/2}$ in einer Siloxan-Bindung oder OH oder OM, mit M gleich ein einwertiges Alkaliion, wie $Na^+$ oder $K^+$, in -ONa, -OK, oder gegebenenfalls Wasserstoff für -OH, mit x, y, a, c und b wie vorstehend definiert, wobei der Quotient von (a+c)/(b+m) bevorzugt kleiner 1 ist, insbesondere liegt er im Bereich von 0,11 bis 0,5.

Ebenfalls Gegenstand der Erfindung ist eine Zusammensetzung erhältlich nach dem erfindungsgemäßen Verfahren umfassend ein wasserlösliches Block-Co-Kondensat von Alkali-Propylsiliconaten mit Alkalisilicaten mit einen pH-Wert $\geq$ 11, insbesondere ist der pH-Wert 14. Ebenfalls Gegenstand der Erfindung ist eine Zusammensetzung erhältlich nach dem erfindungsgemäßen Verfahren, die im Wesentlichen alkoholfrei ist und/oder die vorzugsweise Block-Co-Kondensate von Alkali-Propylsiliconaten mit Alkalisilicaten, weiter bevorzugt Natriumsilicat, Kaliumsilicat, aufweist und insbesondere die Block-Co-Kondensate von Alkali-Propylsiliconaten mit Alkalisilicaten im Gemisch mit monomeren Alkali-Propylsilanolaten und/oder Alkalisilicaten vorliegen.

Ein weiterer Gegenstand der Erfindung ist die Verwendung einer erfindungsgemäßen Zusammensetzung bzw. einer nach dem erfindungsgemäßen Verfahren hergestellten Zusammensetzung zur Hydrophobierung von Holz, cellulosehaltigen Baumaterialien und/oder lingnocellulosehaltigen Baumaterialien, zur Hydrophobierung von mineralischen Baustoffen, zur Hydrophobierung der Oberfläche mineralischer Baustoffe und/oder zur Hydrophobierung von mineralischen Baustoffen in der Masse. Dabei kann die Verwendung der Zusammensetzung zur Hydrophobierung eines Teils des mineralischen Baustoffes oder auch zur Hydrophobierung des gesamten mineralischen Baustoffes verwendet werden, jeweils umfassend Beton, Estrich, Putz, Gips, Mörtel, Lehm, Ton, Sand, Keramik, Terrakotta, Kalksandstein, Naturstein, wie Sandstein, Marmor, Granit sowie Artikel daraus oder Artikel enthaltend diese, wie Formteile, die beispielsweise Rohre, Ziegel, Bodenplatten, Wände, Fliesen, Gartenkübel, Dachziegel sowie weitere übliche, dem Fachmann bekannte mineralische Baustoffe und Artikel aus diesen Baustoffen umfassen. Ebenfalls Gegenstand der Erfindung ist die Verwendung einer erfindungsgemäßen Zusammensetzung als Injektionsmittel zur Ausbildung von Sperrschichten, insbesondere zur Ausbildung von horizontalen und/oder vertikalen Sperrschichten in Mauerwerken oder Böden. Das Injektionsmittel kann drucklos oder unter Druck in Bohrlöcher injiziert werden. Die damit hergestellten Sperrschichten geben effektiven Schutz gegen aufsteigende Feuchtigkeit im Mauerwerk.

Die folgenden Beispiele erläutern das erfindungsgemäße Verfahren und die erfindungsgemäße Verwendung näher, ohne die Erfindung auf diese Beispiele zu beschränken.

**Beispiele**

**Bestimmung des Molekulargewichts**: Die Bestimmung von Molmassen bzw. des Molekulargewichts sowie der Molmassenverteilung kann mittels Gelpermeationschromatographie (GPC) erfolgen. Das GPC-Analyseverfahren wird u. a. in "Modern Size-Exclusion Liquid Chromatography", Andre Striegel et al, Verlag Wiley & Sons, 2. Aufl. 2009, ausführlich beschrieben. Dabei kann man zur Kalibrierung der Methode als Standard beispielsweise Polyethylenoxid/Polyethylenglykol verwenden. Die Polydispersität (D) ist der Quotient aus Mw/Mn. Gewichtsmittel des Das Molekulargewicht (Mw) ist definiert als:

$$M_w = \frac{\sum n_i M_i^2}{\sum n_i M_i}$$

und das Zahlenmittel des Molekulargewichts (Mn) als:

$$M_n = \frac{\sum n_i M_i}{\sum n_i}$$

jeweils mit:

$n_i$ = Stoffmenge [Masse] des i-mers
$M_i$ = Molmasse des i-mers

Details zur Definition für Gewichtsmittel und Zahlenmittel, die dem Fachmann an sich bekannt sind, kann der Leser aber auch u. a. dem Internet unter http://de.wikipedia.org/wiki/Molmassenverteilung oder einem Standardwerk der Mathematik entnehmen.

**Beispiel 1**

Herstellung einer ca. 50 %igen wässrigen Lösung aus K-Propylsiliconat/Silicat

Schritt (i): In einem 500 ml-Rundkolben mit Rührer, Rückflusskühler und Tropftrichter wurden 100 g eines 1 : 1-Gemisches (bezogen auf die molare Zusammensetzung) aus Propyltrichlorsilan und Tetrachlorsilan vorgelegt. Unter kräftigem Rühren wurden langsam, tropfenweise 102,2 g Ethanol zugegeben. Die Temperatur stieg bei der Zugabe an. Sie sollte aber nicht über 60 °C steigen. Bei Bedarf wurde gegengekühlt. Nach vollständiger Zugabe des Ethanols wurde für weitere 30 min gerührt und das erhaltene Zwischenprodukt direkt weiterverwendet. Das überschüssige Ethanol wurde über Kopf abdestilliert.

Schritt (ii): In einem 1000-ml-Rundkolben mit Rührer, Rückflusskühler und Tropftrichter wurden 311 g einer 33,3 %igen wässrigen KOH-Lösung und 108 g 35 %iges Natronwasserglas vorgelegt. In einem Tropftrichter wurden 100 g des Produktes aus dem ersten Reaktionsschritt vorgelegt. Das Zwischenprodukt wurde nun unter kräftigem Rühren tropfenweise zur KOH/Natronwasserglas-Mischung gegeben. Nach vollständiger Zugabe wurde ein leicht trübes Produkt erhalten. Dieses wurde 30 min bei 50°C weitergerührt. Das entstandene Ethanol wurde abdestilliert. Man erhielt ein klares, niederviskoses Produkt.

GPC-Analyse: Fraktion höhermolekularer Block-Co-Kondensate mit $M_w$ circa 1200 g/mol mit D = 1,0 ($M_n$ = 1,1x10³ g/mol) zu etwa 62,1 % und eine weitere Fraktion niedermolekularer Silikate bzw. Silanolate mit $M_w$ circa 110 g/mol mit D = 1,1 ($M_n$ = 1,1x10$^2$ g/mol) zu etwa 37,9 %. Das Gesamtmolekulargewichtsmittel $M_w$ liegt bei circa 760 g/mol mit D = 5,3 ($M_n$ = 1,4 x 10$^2$ g/mol). $^{29}$Si-NMR: ca. 24,2 % $C_3H_7$-Si(O$^-$)$_3$, ca. 75,8 % Si(O$^-$)$_4$.

**Vergleichsbeispiel 2**

Circa 54 % Kalium-Methylsiliconat-Lösung (entspricht circa 34 % Methylsiliconat-Lösung ohne Berücksichtigung von $K_2O$ circa 20 Gew.-%).

**Ausprüfungen der Reaktionsprodukte aus Beispielen:**

Die Reaktionsprodukte aus Beispiel 1 und dem Vergleichsbeispiel 2 wurden in einer Verdünnung von 1 : 20 mit Wasser verwendet. Massive Ziegelwürfel aus Poroton Vollziegel mit einer Kantenlänge von 50 mm wurden bei 25 °C und 60 % rel. Feuchte für 24 h konditioniert und anschließend 5 s in die Verdünnungen aus den Beispielen 1, Vergleichsbeispiel (VG-Beispiel) 2 getaucht. Anhaftende Feuchtigkeit wurde durch leichtes Abtupfen der Oberflächen mit einem Zellstofftuch entfernt. Anschließend wurden die behandelten Probekörper bei 25 °C und 60 % rel. Feuchte für 14 Tage so gelagert, dass Luft von allen Seiten hinzutreten konnte. An diesen Probekörpern wurde die Reduktion der Wasseraufnahme in Anlehnung an DIN EN 13580 bestimmt. Dabei wurde die prozentuale Reduktion durch Vergleich mit einem unbehandelten Probekörper gleicher Art berechnet. Die folgende Tabelle 1 zeigt Verbrauchsmengen sowie Reduktion der Wasseraufnahme und Henkeltestergebnisse.

Zur Bestimmung des Abperleffektes wurde mit einer Pasteur-Pipette ca. 1 ml VE-Wasser auf den hydrophobierten Probekörper aufgesetzt. Nach 10 Minuten wurde der Wassertropfen abgeschüttelt und der Benetzungsgrad visuell beurteilt. (Noten: 0 = Wasser perlt ab, 1 = keine Benetzung, 2 = Kontaktfläche zur Hälfte benetzt, 3 = Kontaktfläche voll benetzt, 4 = dunkle Färbung der Kontaktfläche, Tropfen etwas aufgesogen, 5 = dunkle Färbung der Kontaktfläche, Tropfen zu 50 % aufgesogen, 6 = dunkle Färbung der Kontaktfläche, Tropfen ganz aufgesogen).

Tabelle 1: Reduktion der Wasseraufnahme und Henkeltest von Ziegel behandelt mit Produkten der Beispiele.

| Auftrag | Substrat | Auftragsmenge [g/m$^2$] | Reduktion der Wasseraufnahme [%] | Henkeltest Noten |
|---|---|---|---|---|
| Produkt aus Beispiel 1 | Ziegel | 427 | 87,3 | 0 |
| Produkt aus VG.-Beispiel 2 | Ziegel | 423 | 83,1 | 4 |

Es ist deutlich zu erkennen, dass die Wasseraufnahme bei deutlich verbessertem Henkeltestergebnis weiter reduziert werden konnte.

Zusätzlich wurden zylinderförmige Gipsprobekörper aus einem handelsüblichen Gips der Firma Knauf mit einem Wasser zu Gips Verhältnis von 0,5 hergestellt. Zur wässrigen Gipsslurry wurden 1, 2 oder 3 Gew.-% (rel. zum Gipspulver) des Reaktionsproduktes aus Beispiel 1 (unverdünnt) und 3 Gew.-% aus Vergleichsbeispiel 2 (unverdünnt) zugegeben. Die Gipsprobekörper hatten einen Durchmesser von 50 mm, eine Höhe von 25 mm und wurden in PE-Schalungen gegossen. Die Gipsprobekörper wurden für 28 Tage bei 25 °C und 60 % rel. Feuchte ausgehärtet, nach 2 Tagen bei diesen Bedingungen wurde entschalt. Anschließend wurde so gelagert, dass Luft von allen Seiten frei zirkulieren konnte. Die Wasseraufnahme wurde in Anlehnung an DIN EN 520 bestimmt. Die Ergebnisse sind der nachfolgenden Tabelle 2 zu entnehmen.

**Tabelle 2: Wasseraufnahme von Gipsprobekörper**

| Gipsprobekörper | Wasseraufnahme [%] |
|---|---|
| unbehandelt | 17,8 |
| Gipsprobekörper+1 Gew.-% Produkt aus Beispiel 1 | 11,1 |
| Gipsprobekörper+2 Gew.-% Produkt aus Beispiel 1 | 0,7 |
| Gipsprobekörper+3 Gew.-% Produkt aus Beispiel 1 | 0,2 |
| Gipsprobekörper+3 Gew.-% Produkt aus Vergleichsbeispiel 2 | 0,5 |

Es ist deutlich zu erkennen, dass das erfindungsgemäße Produkt sowohl auf Ziegeln, als auch in Gips, als Hydrophobierung in der Masse, eine stark verbesserte Performance gegenüber dem bekannten Produkt aufweist.

**Patentansprüche**

1.  Zusammensetzung enthaltend im Wesentlichen wasserlösliche Block-Co-Kondensate von Alkali-Propylsiliconaten mit Alkalisilicaten und Wasser, erhältlich, indem

    (i) ein Gemisch umfassend Propylalkoxysilane und Propyl-funktionelle Siloxane abgeleitet aus einem Propylsilan der allgemeinen Formel II,

    $$(R^1)_x SiX_{(y-x)} \qquad \text{(II)}$$

    mit $R^1$ unabhängig ein Propyl-funktioneller Rest und hydrolysierbarem Rest X, der unabhängig Alkoxy oder ein Halogen ist, wobei Alkoxy ausgewählt ist aus Ethoxy, Methoxy, Propoxy und Butoxy und Halogen ausgewählt ist aus Chlor und Brom, mit x gleich 1 oder 2 und y gleich 4, und einem hydrolysierbaren Silan der Formel III

    $$SiY_4 \qquad \text{(III)}$$

    mit hydrolysierbarem Rest Y, der unabhängig Alkoxy oder Halogen ist, wobei Alkoxy ausgewählt ist aus Ethoxy, Methoxy, Propoxy und Halogen ausgewählt ist aus Chlor und Brom, eingesetzt wird, und
    (ii) eine Mischung mindestens eines wasserlöslichen Alkalisilicats umfassend ein Natriumwasserglas und/oder ein Kaliumwasserglas und einer wässerigen alkalischen Lösung eines oder mehrerer Alkalihydroxide umgesetzt werden und
    (iii) gebildeter Hydrolysealkohol entfernt wird.

2.  Zusammensetzung nach Anspruch 1,
    **dadurch gekennzeichnet**,

    (i) das Gemisch Propylalkoxysilane, Tetraalkoxysilane und/oder Kondensate dieser abgeleitet aus Propylhalogensilanen der Formel II mit X gleich Halogen und Tetrahalogensilan der Formel III mit Y gleich Halogen umfasst.

3.  Zusammensetzung nach Anspruch 1 oder 2,
    **dadurch gekennzeichnet,**
    **dass** die Alkalihydroxide ausgewählt sind aus Kaliumhydroxid, Natriumhydroxid, Lithiumhydroxid.

4.  Zusammensetzung nach einem der Ansprüche 1 bis 3,
    **dadurch gekennzeichnet,**
    **dass** die Block-Co-Kondensate von Alkali-Propylsiliconaten mit Alkalisilicaten im Gemisch mit monomeren Alkali-Propylsilanolaten und/oder Alkalisilicaten vorliegen.

5.  Zusammensetzung nach einem der Ansprüche 1 bis 4,

    **dadurch gekennzeichnet,**
    **dass** sie im Wesentlichen alkoholfrei ist und beim Vernetzen im Wesentlichen keinen Alkohol mehr freisetzt.

6.  Verfahren zur Herstellung einer Zusammensetzung enthaltend mindestens ein im Wesentlichen wasserlösliches Block-Co-Kondensat von Alkali-Propylsiliconaten mit Alkalisilicaten und Wasser, indem

    (i) (1) ein Gemisch umfassend Propylalkoxysilan und -siloxan hergestellt wird indem
    ein Propylsilan der allgemeinen Formel II mit X gleich Halogen mit einem Alkohol gegebenenfalls in Gegenwart von Wasser umgesetzt wird, und Entfernen des Alkohols und/oder Hydrolysealkohols
    oder

    (2) ein Gemisch umfassend Propylalkoxysilan und Tetraalkoxysilan und/oder
    Kondensate oder Co-Kondensate dieser hergestellt wird indem
    mindestens ein Propylsilan der allgemeinen Formel II mit X gleich Halogen und mindestens ein hydrolysierbares Silan der Formel III mit Y gleich Halogen mit einem Alkohol gegebenenfalls in Gegenwart von Wasser umgesetzt werden, und Entfernen des Alkohols und/oder Hydrolysealkohols, und

    wobei

(ii) das Gemisch umfassend Propylalkoxysilan und Propyl-funktionelle Siloxane abgeleitet aus einem Propylsilan der allgemeinen Formel II

$$(R^1)_x SiX_{(y-x)} \qquad (II),$$

mit $R^1$ unabhängig ein Propyl-funktioneller Rest und hydrolysierbarem Rest X,
der unabhängig Alkoxy oder ein Halogen ist, x ist gleich 1 oder 2 und y gleich 4,

und gegebenenfalls einem hydrolysierbaren Silan der Formel III

$$SiY_4 \qquad (III),$$

mit hydrolysierbarem Rest Y, der unabhängig Alkoxy oder ein Halogen ist,
und
eine Mischung mindestens eines wasserlöslichen Alkalisilicats und einer wässerigen alkalischen Lösung einer anorganischen Base ausgewählt aus Kaliumhydroxid, Natriumhydroxid, Lithiumhydroxid umgesetzt werden, und
(iii) gebildeter Hydrolysealkohol entfernt wird.

7. Verfahren nach Anspruch 6,
**dadurch gekennzeichnet,**
**dass** das Alkalisilicat ein Natronwasserglas und/oder ein Kaliumwasserglas ist.

8. Verfahren nach Anspruch 6 oder 7,
**dadurch gekennzeichnet,**
**dass** der hydrolysierbare Rest X der Formel II unabhängig ein Methoxy, Ethoxy, Propoxy, Butoxy, Chlor und/oder Brom ist, insbesondere Chlor, und
der hydrolysierbare Rest Y der Formel III unabhängig ein Methoxy, Ethoxy, Propoxy, Butoxy, Chlor und/oder Brom ist, insbesondere Chlor.

9. Verfahren nach Anspruch 8,
**dadurch gekennzeichnet,**
**dass** das Gemisch abgeleitet aus einem Propylhalogensilan der allgemeinen Formel II und gegebenenfalls einem Tetrahalogensilan der Formel III der Mischung eines wasserlöslichen Silicats in wässeriger alkalischer Lösung zugesetzt wird.

10. Verfahren nach einem der Ansprüche 6 bis 9,
**dadurch gekennzeichnet,**
**dass** das Propylsilan der allgemeinen Formel II und das Silan der Formel III in einem molaren Verhältnis von 1 : 0 bis 3 : 1 eingesetzt werden.

11. Verfahren nach Anspruch 6,
**dadurch gekennzeichnet,**
**dass** der Alkohol im molaren Verhältnis von 0,001 : 1 bis 100 : 1 in Bezug auf die hydrolysierbaren Reste in Mol zugesetzt wird.

12. Verfahren nach einem der Ansprüche 6 bis 11,
**dadurch gekennzeichnet,**
**dass** der Anteil an wasserlöslichem Block-Co-Kondensat von Alkali-Propylsiliconaten mit Alkalisilicaten in der Zusammensetzung von 1 bis 60 Gew.-%, bezogen auf das Gesamtgewicht der Zusammensetzung, beträgt, wobei optional der Gehalt durch Zugabe von Wasser eingestellt wird.

13. Zusammensetzung erhältlich nach einem Verfahren gemäß einem der Ansprüche 6 bis 12, **dadurch gekennzeichnet, dass** sie ein wasserlösliches Block-Co-Kondensat von Alkali-Propylsiliconaten mit Alkalisilicaten enthält und einen pH-Wert $\geq 11$ aufweist.

14. Verwendung einer Zusammensetzung erhalten nach einem der Ansprüche 6 bis 12 oder einer Zusammensetzung nach einem der Ansprüche 1 bis 5 oder 13 zur Hydrophobierung von Holz, cellulosehaltigen Baumaterialien und/oder lingnocellulosehaltigen Baumaterialien, zur Hydrophobierung von mineralischen Baustoffen, zur Hydrophobierung der Oberfläche mineralischer Baustoffe und/oder zur Hydrophobierung von mineralischen Baustoffen in der Masse, wobei die mineralischen Baustoffe Beton, Estrich, Gips, Putz, Mörtel, Lehm, Ton, Ziegel, Sand, Keramik, Terrakotta, Kalksandstein, Naturstein, wie Sandstein, Marmor, Granit, umfassen oder als Injektionsmittel zur Ausbildung von Sperrschichten.

**Claims**

1. Composition comprising substantially water-soluble block cocondensates of alkali metal propylsiliconates with alkali silicates and water, obtainable by reacting

   (i) a mixture comprising propylalkoxysilanes and propyl-functional siloxanes derived from a propylsilane of the general formula II

$$(R^1)_x SiX_{(y-x)} \qquad (II)$$

   with $R^1$ independently being a propyl-functional radical, and with hydrolysable radical X which is independently alkoxy or a halogen, wherein alkoxy is selected from ethoxy, methoxy, propoxy and butoxy and halogen is selected from chlorine and bromine, with x being 1 or 2 and y being 4, and from a hydrolysable silane of the formula III

$$SiY_4 \qquad (III)$$

   with hydrolysable radical Y, which independently is alkoxy or halogen, wherein alkoxy is selected from ethoxy, methoxy, propoxy and halogen is selected from chlorine and bromine, and
   (ii) a mixture of at least one water-soluble alkali metal silicate comprising a sodium waterglass and/or a potassium waterglass and an aqueous alkaline solution of one or more alkali metal hydroxides and
   (iii) removing hydrolysis alcohol formed.

2. Composition according to Claim 1,
   **characterized in that**

   (i) the mixture comprises propylalkoxysilanes, tetraalkoxysilanes and/or condensates thereof, derived from propylhalosilanes of the formula II where X is halogen and from tetrahalosilane of the formula III where Y is halogen.

3. Composition according to Claim 1,
   **characterized**
   **in that** the alkali metal hydroxides are selected from potassium hydroxide, sodium hydroxide and lithium hydroxide.

4. Composition according to any of Claims 1 to 3,
   **characterized**
   **in that** the block cocondensates of alkali metal propylsiliconates with alkali metal silicates are present in a mixture with monomeric alkali metal propylsilanolates and/or alkali metal silicates.

5. Composition according to any of Claims 1 to 4,
   **characterized**
   **in that** it is substantially alcohol-free and no longer releases substantially any alcohol during crosslinking.

6. Process for preparing a composition comprising at least one substantially water-soluble block cocondensate of alkali metal propylsiliconates with alkali metal silicates and water, by preparing

   (i) (1) a mixture comprising propylalkoxysilane and -siloxane by reacting a propylsilane of the general formula II where X is halogen with an alcohol, optionally in the presence of water, and removal of the alcohol and/or hydrolysis alcohol,
   or

(2) a mixture comprising propylalkoxysilane and tetraalkoxysilane and/or condensates or cocondensates thereof by reacting at least one propylsilane of the general formula II where X is halogen and at least one hydrolysable silane of the formula III where Y is halogen with an alcohol, optionally in the presence of water, and removal of the alcohol and/or hydrolysis alcohol, and

where
(ii) the mixture comprising propylalkoxysilane and propyl-functional siloxanes derived from a propylsilane of the general formula II

$$(R^1)_x SiX_{(y-x)} \qquad (II),$$

with $R^1$ independently being a propyl-functional radical and with hydrolysable radical X, which independently is alkoxy or a halogen, x is 1 or 2 and y is 4,
and optionally from a hydrolysable silane of the formula III

$$SiY_4 \qquad (III),$$

with hydrolysable radical Y, which independently is alkoxy or a halogen,
and
a mixture of at least one water-soluble alkali metal silicate and an aqueous alkaline solution of an inorganic base selected from potassium hydroxide, sodium hydroxide and lithium hydroxide,
and
(iii) hydrolysis alcohol formed is removed.

7. Process according to Claim 6,
   **characterized**
   **in that** the alkali metal silicate is a sodium waterglass and/or a potassium waterglass.

8. Process according to Claim 6 or 7,
   **characterized**
   **in that** the hydrolysable radical X of the formula II independently is a methoxy, ethoxy, propoxy, butoxy, chloro and/or bromo, more particularly chloro, and
   the hydrolysable radical Y of the formula III independently is a methoxy, ethoxy, propoxy, butoxy, chloro and/or bromo, more particularly chloro.

9. Process according to Claim 8,
   **characterized**
   **in that** the mixture derived from a propylhalosilane of the general formula II and optionally from a tetrahalosilane of the formula III is added to the mixture of a water-soluble silicate in aqueous alkaline solution.

10. Process according to any of Claims 6 to 9,
    **characterized**
    **in that** the propylsilane of the general formula II and the silane of the formula III are used in a molar ratio of 1:0 to 3:1.

11. Process according to Claim 6,
    **characterized**
    **in that** the alcohol is added in a molar ratio of 0.001:1 1 to 100:1 in relation to the hydrolysable radicals, in moles.

12. Process according to any of Claims 6 to 11,
    **characterized**
    **in that** the fraction of water-soluble block cocondensates of alkali metal propylsiliconates with alkali metal silicates in the composition is from 1 to 60 wt%, based on the total weight of the composition, the amount being optionally adjusted by addition of water.

13. Composition obtainable by a process according to any of Claims 6 to 12, **characterized in that** it comprises a water-soluble block cocondensate of alkali metal propylsiliconates with alkali metal silicates and has a pH ≥ 11.

14. Use of a composition obtained according to any of Claims 6 to 12 or of a composition according to any of Claims 1 to 5 or 13 for hydrophobizing wood, cellulosic building materials and/or lignocellulosic building materials, for hydrophobizing mineral building materials, for hydrophobizing the surface of mineral building materials and/or for hydrophobizing mineral building materials in the bulk material, the mineral building materials comprising concrete, screed, gypsum, plaster, mortar, loam, clay, brick, sand, ceramic, terracotta, lime sandstone, natural stone, such as sandstone, marble, granite, or as injection material to form barrier layers.

**Revendications**

1.  Composition contenant des produits séquencés de cocondensation essentiellement solubles dans l'eau de propylsiliconates de métal alcalin avec des silicates de métal alcalin et de l'eau, pouvant être obtenus en ce que

    (i) un mélange comprenant des propylalcoxysilanes et des siloxanes à fonctionnalité propyle, dérivés d'un propylsilane de formule générale II,

    $$(R^1)_x SiX_{(y-x)} \qquad (II)$$

    dans laquelle $R^1$ représente indépendamment un radical à fonctionnalité propyle et le radical hydrolysable X représente, indépendamment, alcoxy ou halogène, alcoxy étant choisi parmi éthoxy, méthoxy, propoxy et butoxy et halogène étant choisi parmi chlore et brome, x valant 1 ou 2 et y valant 4, et un silane hydrolysable de formule III

    $$SiY_4 \qquad (III)$$

    dans laquelle le radical hydrolysable Y représente, indépendamment, alcoxy ou halogène, alcoxy étant choisi parmi éthoxy, méthoxy, propoxy et halogène étant choisi parmi chlore et brome, est utilisé, et
    (ii) un mélange d'au moins deux silicates de métal alcalin solubles dans l'eau, comprenant du verre soluble sodique et/ou du verre soluble potassique et une solution aqueuse alcaline d'un ou de plusieurs hydroxydes de métal alcalin, sont transformés et
    (iii) l'alcool d'hydrolyse formé est éliminé.

2.  Composition selon la revendication 1, **caractérisée**

    (i) **en ce que** le mélange comprend des propylalcoxysilanes, des tétraalcoxysilanes et/ou des produits de condensation de ceux-ci, dérivés des propylhalogénosilanes de formule II, dans laquelle X représente halogène, et un tétrahalogénosilane de formule III dans laquelle Y représente halogène.

3.  Composition selon la revendication 1 ou 2, **caractérisée en ce que** les hydroxydes de métal alcalin sont choisis parmi l'hydroxyde de potassium, l'hydroxyde de sodium, l'hydroxyde de lithium.

4.  Composition selon l'une quelconque des revendications 1 à 3, **caractérisée en ce que** les produits séquencés de cocondensation de propylsiliconates de métal alcalin avec des silicates de métal alcalin se trouvent en mélange avec des propylsilanolates de métal alcalin monomères et/ou des silicates de métal alcalin monomères.

5.  Composition selon l'une quelconque des revendications 1 à 4, **caractérisée en ce qu'**elle est essentiellement exempte d'alcool et ne libère essentiellement plus d'alcool lors de la réticulation.

6.  Procédé pour la préparation d'une composition contenant au moins un produit séquencé de cocondensation essentiellement soluble dans l'eau de propylsiliconates de métal alcalin avec des silicates de métal alcalin et de l'eau, en ce que

    (i) (1) un mélange comprenant du propylalcoxysilane et du propylalcoxysiloxane est préparé en ce qu'un propylsilane de formule générale II, dans laquelle X représente halogène, est transformé avec un alcool, le cas échéant en présence d'eau, et l'alcool et/ou l'alcool d'hydrolyse est/sont éliminé (s) ou

    (2) un mélange comprenant du propylalcoxysilane et du tétraalcoxysilane et/ou des produits de condensation ou de cocondensation de ceux-ci est préparé en ce qu'au moins un propylsilane de formule générale II, dans laquelle X représente halogène, et au moins un silane hydrolysable de formule III, dans laquelle Y représente halogène, sont transformés avec un alcool, le cas échéant en présence d'eau, et l'alcool et/ou l'alcool d'hydrolyse est/sont éliminé (s) et

(ii) le mélange comprenant du propylalcoxysilane et des siloxanes à fonctionnalité propyle, dérivés d'un propylsilane de formule générale II,

$$(R^1)_x SiX_{(y-x)} \qquad (II),$$

dans laquelle $R^1$ représente, indépendamment, un radical à fonctionnalité propyle et le radical hydrolysable X représente, indépendamment, alcoxy ou halogène, x vaut 1 ou 2 et y vaut 4,
et le cas échéant un silane hydrolysable de formule III

$$SiY_4 \qquad (III),$$

dans laquelle le radical hydrolysable Y représente, indépendamment, alcoxy ou halogène, et un mélange d'au moins un silicate de métal alcalin soluble dans l'eau et d'une solution alcaline aqueuse d'une base organique, choisie parmi l'hydroxyde de potassium, l'hydroxyde de sodium, l'hydroxyde de lithium, sont transformés, et
(iii) l'alcool d'hydrolyse formé est éliminé.

7. Procédé selon la revendication 6, **caractérisé en ce que** le silicate de métal alcalin est du verre soluble sodique et/ou du verre soluble potassique.

8. Procédé selon la revendication 6 ou 7, **caractérisé en ce que** le radical hydrolysable X de formule II représente, indépendamment, méthoxy, éthoxy, propoxy, butoxy, chlore et/ou brome, en particulier chlore, et le radical hydrolysable Y de formule III représente, indépendamment, méthoxy, éthoxy, propoxy, butoxy, chlore et/ou brome, en particulier chlore.

9. Procédé selon la revendication 8, **caractérisé en ce que** le mélange dérivé d'un propylhalogénosilane de formule générale II et le cas échéant d'un tétrahalogénosilane de formule III est ajouté au mélange d'un silicate soluble dans l'eau dans une solution alcaline aqueuse.

10. Procédé selon l'une quelconque des revendications 6 à 9, **caractérisé en ce que** le propylsilane de formule générale II et le silane de formule III sont utilisés dans un rapport molaire de 1:0 à 3:1.

11. Procédé selon la revendication 6, **caractérisé en ce que** l'alcool est ajouté dans un rapport molaire de 0,001:1 à 100:1 par rapport aux radicaux hydrolysables en moles.

12. Procédé selon l'une quelconque des revendications 6 à 11, **caractérisé en ce que** la proportion de produit séquencé de cocondensation soluble dans l'eau de propylsiliconates de métal alcalin avec des silicates de métal alcalin dans la composition est de 1 à 60% en poids, par rapport au poids total de la composition, la teneur étant éventuellement réglée par addition d'eau.

13. Composition pouvant être obtenue selon un procédé selon l'une quelconque des revendications 6 à 12, **caractérisée en ce qu'**elle contient un produit séquencé de cocondensation de propylsiliconates de métal alcalin avec des silicates de métal alcalin et présente un pH $\geq$ 11.

14. Utilisation d'une composition obtenue selon l'une quelconque des revendications 6 à 12 ou d'une composition selon l'une quelconque des revendications 1 à 5 ou 13 pour l'hydrofugation de bois, de matériaux de construction contenant de la cellulose et/ou de matériaux de construction contenant de la lignocellulose, pour l'hydrofugation de matériaux de construction minéraux, pour l'hydrofugation de la surface de matériaux de construction minéraux et/ou pour l'hydrofugation de matériaux de construction minéraux dans la masse, les matériaux de construction minéraux comprenant le béton, les chapes, le plâtre, le crépi, le mortier, la terre glaise, l'argile, les tuiles, le sable, la céramique, le terra cotta, le grès calcaire, la pierre naturelle, telle que le grès, le marbre, le granite, ou comme agent d'injection pour la formation de couches de blocage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0650968 A
- US 4281147 A
- EP 0015366 A
- DE 3105407
- US 20070028809 A
- US 3849357 A
- US 20110207852 A1
- WO 2012139803 A1

**In der Beschreibung aufgeführte Nicht-Patentliteratur**

- **ANDRE STRIEGEL et al.** Modern Size-Exclusion Liquid Chromatography. Verlag Wiley & Sons, 2009